# FASCICULE DE BREVET EUROPEEN

(11) **EP 1 364 834 B1**
(45) Date de publication et mention de la délivrance du brevet: **23.02.2005**
(21) Numéro de dépôt: 03291980.5
(22) Date de dépôt: 05.06.2000
(51) Int. Cl.: B60R 5/04

(54) **Dispositif pour retenir et articuler une tablette arrière amovible de véhicule automobile**
Vorrichtung zum Halten und Anlenken einer abnehmbaren Kraftfahrzeugheckplatte
Device for holding and articulating a removable parcel shelf for vehicles

(30) Priorité: 11.06.1999 FR 9907417
(43) Date de publication de la demande: 26.11.2003
(62) Demande divisionnaire de: 00401572.3
(73) Titulaire: Sai Automotive Sommer Industrie, 92748 Nanterre (FR)
(72) Inventeur: Blanchard, Christophe c/o Faurecia Interieur Indt., 60114 Meru cedex (FR); Habert, Cédric, 60660 Cires-Les-Mello (FR)
(74) Mandataire: Arnaud, Jean

(56) Documents cités:
- EP-A- 0 927 663
- DE-A- 19 723 838
- DE-A- 19 735 439

## Description

L'invention a pour objet un dispositif pour retenir et articuler une tablette arrière amovible de véhicule automobile.

Il est souvent utile, en particulier dans le cas des véhicules présentant un hayon, d'une part de faire pivoter la tablette arrière pour faciliter l'accès au coffre et d'autre part de retirer la tablette arrière pour augmenter la capacité de chargement du coffre.

FR-A-2 641 506 décrit une tablette munie de deux arbres circulaires maintenus de manière libérable par rapport à un support au moyen de paliers présentant chacun une ouverture destinée à favoriser l'introduction de l'arbre. Un ressort d'appui est disposé dans chacun des paliers pour maintenir l'arbre correspondant.

L'invention vise à proposer un dispositif plus simple, moins cher et plus facile d'utilisation. Conformément à l'invention, le dispositif comprend, outre ladite tablette, un support destiné à être fixé au véhicule, et présente les caractéristiques suivantes :
- ledit support comprend un arbre,
- ladite tablette comprend un alésage allongé présentant une ouverture le long de sa direction d'allongement pour permettre l'engagement et le désengagement de l'arbre par rapport à l'alésage par déformation élastique de l'alésage, et
- la tablette est mobile par rotation de l'arbre dans l'alésage entre une position basse et une position haute, et comprend une zone formant levier, venant en appui sur le support en position haute de la tablette pour libérer l'arbre.

Le levier a tendance à ouvrir l'alésage et à écarter la tablette du support, de sorte que l'utilisateur a un effort moindre à déployer pour libérer la tablette.

Selon une autre caractéristique de l'invention, le dispositif comprend en outre des moyens pour ranger la tablette en position sensiblement verticale dans le coffre du véhicule, le long de la banquette, lorsqu'elle est libérée du support.

Ainsi, la tablette peut être conservée dans le véhicule sans constituer de gêne une fois détachée.

En variante, l'invention propose que le dispositif comprenne en outre des moyens pour ranger la tablette en position sensiblement verticale, au coeur du coffre du véhicule, afin de former une cloison de séparation, lorsqu'elle est libérée du support.

Ainsi, l'utilisateur peut réduire le mouvement du chargement dans le coffre, lorsque celui-ci ne remplit pas complètement le coffre, ou séparer ce chargement en deux lorsqu'il contient des produits qu'il est préférable de ne pas mettre en contact.

Par ailleurs, l'invention propose que le dispositif comprenne des moyens d'indexation de la tablette en rotation, pour maintenir la tablette dans au moins une position inclinée.

L'invention va apparaître encore plus clairement dans la description qui va suivre, faite en référence aux dessins annexés dans lesquels :
- la figure 1 est une vue en coupe d'un dispositif conforme à l'invention,
- la figure 2 est une vue élargie du dispositif de la figure 6, la tablette étant disposée dans deux rangements.

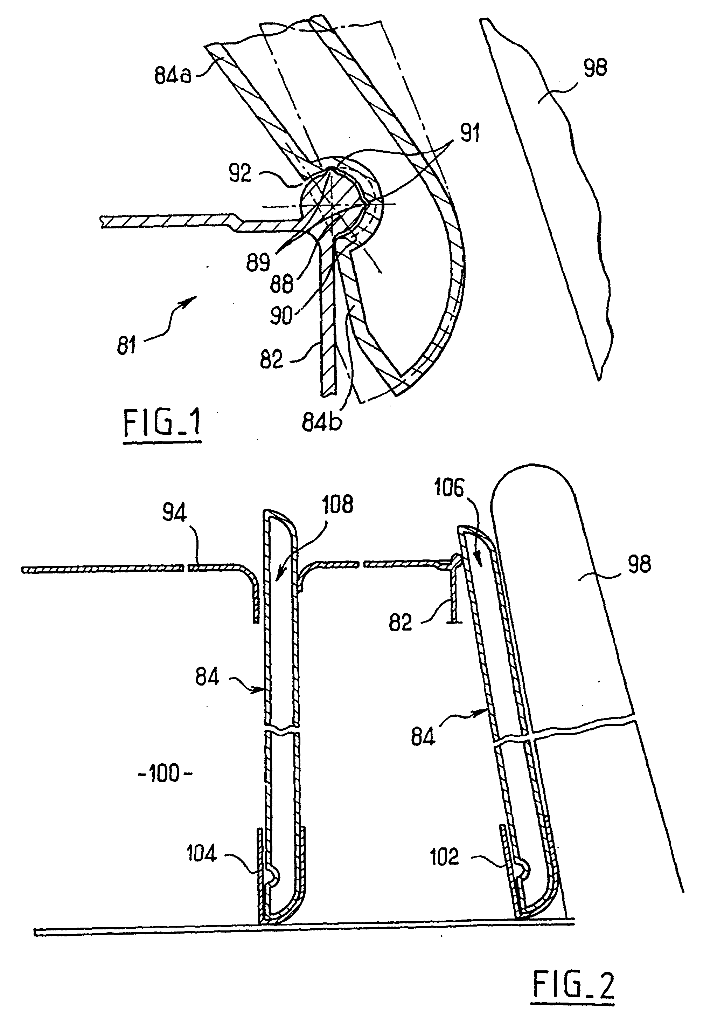

Les figures 1 et 2 illustrent un dispositif 81 comprenant un support 82 et une tablette rigide 84. Le support 82 comprend un arbre 88 de section circulaire venant s'insérer dans un alésage 90 de forme complémentaire ménagé dans la tablette 84 pour la faire pivoter.

L'alésage 90, élastiquement déformable, présente une direction d'allongement et une ouverture radiale 92 s'étendant le long de sa direction d'allongement et légèrement inférieure à 180 degrés, se sorte qu'elle présente en section une forme sensiblement en "Ω", pour permettre d'engager ou de dégager élastiquement l'arbre 88 et l'alésage 90.

La tablette 84 s'étend de part et d'autre de l'alésage 90. Elle présente une partie principale 84a disposée d'un coté de l'alésage et une partie formant levier 84b prolongeant la partie principale au-delà de l'alésage 90.

Lorsque la tablette 84 est en position haute, illustrée en trait fort à la figure 6, le levier 84b vient en appui sur le support 82. Si l'utilisateur poursuit son mouvement de levage de la partie principale de la tablette, il provoque la séparation de l'alésage 90 et de l'arbre 88, par déformation élastique et plus précisément élargissement de l'ouverture 92, tel qu'illustré en trait mixte (trait fantôme).

En outre, l'arbre 88 comporte des bossages 89 venant s'insérer élastiquement dans des creux 91 de l'alésage pour maintenir la tablette dans des positions inclinées données. Ces bossages et ces creux constituent des moyens d'indexation en rotation de la tablette.

Tel qu'illustré à la figure 2, le dispositif 81 comprend en outre des premiers éléments de maintien 102, disposés sur les parois latérales d'un coffre 100, en partie basse de celui-ci, à proximité de la banquette 98. Un espace 106 étant en outre ménagé entre le support 82 et la banquette arrière 98 du véhicule, la tablette 84 peut être rangée dans le coffre 100, sensiblement verticalement, le long de la banquette arrière 98. Elle est alors maintenue en partie basse dans les éléments de maintien 102 et en partie haute par la banquette 98 et le support 82.

Par ailleurs, la surface d'appui 94 sur laquelle la tablette vient reposer en position basse articulée présente, sensiblement en son milieu, une lumière 108 permettant le passage de la tablette 84 à travers elle, sensiblement verticalement.

Le dispositif présente en outre des deuxièmes moyens de maintien 104 disposés sur les parois latérales du coffre 100, sensiblement à l'aplomb de la lumière 108. La tablette 84 peut alors être également rangée sensiblement verticalement au coeur du coffre 100. Elle y est maintenue en partie basse par les éléments de maintien 104 et en partie haute par la surface d'appui 94 du support 92, de part et d'autre de la lumière 108.

La tablette forme alors une cloison transversale dans le coffre.

## Revendications

1. Dispositif (81) pour retenir et articuler une tablette arrière amovible de véhicule automobile comprenant, outre ladite tablette (84), un support (82) destiné à être fixé au véhicule, **caractérisé en ce que**:
- ledit support comprend un arbre (88),
- ladite tablette (84) comprend un alésage allongé (90) présentant une ouverture (92) le long de sa direction d'allongement pour permettre l'engagement et le désengagement de l'arbre par rapport à l'alésage par déformation élastique de l'alésage, et
- la tablette est mobile par rotation de l'arbre dans l'alésage entre une position basse et une position haute, et comprend une zone formant levier (84b), venant en appui sur le support en position haute de la tablette pour libérer l'arbre.

2. Dispositif selon la revendication 1, **caractérisé en ce qu'**il comprend en outre des moyens (102,106) pour ranger la tablette en position sensiblement verticale dans le coffre du véhicule, le long de la banquette (98), lorsqu'elle est libérée du support.

3. Dispositif selon la revendication 1 ou la revendication 2, **caractérisé en ce qu'**il comprend en outre des moyens (104,108) pour ranger la tablette en position sensiblement verticale, au coeur du coffre (100) du véhicule, afin de former une cloison de séparation, lorsqu'elle est libérée du support.

4. Dispositif selon l'une quelconque des revendications précédentes, **caractérisé en ce qu'**il comprend des moyens d'indexation (89, 91) de la tablette en rotation, pour maintenir la tablette dans au moins une position inclinée.

## Patentansprüche

1. Vorrichtung (81) zum Halten und Anlenken einer abnehmbaren Kraftfahrzeugheckplatte mit, außer der Platte (84), einer Stütze (82), die dazu bestimmt ist, an dem Fahrzeug befestigt zu werden, **dadurch gekennzeichnet, daß**:
- die Stütze eine Achse (88) aufweist,
- die Platte (84) eine verlängerte Bohrung (90) aufweist, welche entlang ihrer Verlängerungsrichtung eine Öffnung (92) hat, um das Eingreifen und Lösen der Achse bezüglich der Bohrung durch elastische Verformung der Bohrung zu gestatten, und
- die Platte durch Drehung der Achse in der Bohrung zwischen einer tiefen Position und einer hohen Position beweglich ist und einen Bereich aufweist, der einen Hebel (84b) bildet, welcher auf der Stütze bei hoher Position der Platte zum Abstützen kommt, um die Achse freizugeben.

2. Vorrichtung nach Anspruch 1, **dadurch gekennzeichnet, daß** sie femer Mittel (102, 106) aufweist, um die Platte in im wesentlichen vertikaler Position in dem Kofferraum des Fahrzeugs längs der Bank (98) anzuordnen, wenn sie von der Stütze freigegeben ist.

3. Vorrichtung nach Anspruch 1 oder nach Anspruch 2, **dadurch gekennzeichnet, daß** sie ferner Mittel (104, 108) aufweist, um die Platte im wesentlichen in vertikaler Position im Inneren des Kofferraums (100) des Fahrzeugs anzubringen, um eine Trennwand zu bilden, wenn sie von der Stütze freigegeben ist.

4. Vorrichtung nach einem der vorhergehenden Ansprüche, **dadurch gekennzeichnet, daß** sie Indexierungsmittel (89, 91) der Platte bei Drehung aufweist, um die Platte in mindestens einer geneigten Position zu halten.

## Claims

1. Device (81) for holding and articulating a removable rear shelf of a motor vehicle, comprising, in addition to said shelf (84), a support (82) which is to be secured to the vehicle, **characterised in that**:
- said support comprises a shaft (88),
- said shelf (84) comprises an elongate bore (90) having an opening (92) along its direction of elongation in order to permit the engagement and the disengagement of the shaft relative to the bore by resilient deformation of the bore, and
- the shelf is movable by rotation of the shaft in the bore between a lower position and an upper position and comprises a region forming a lever (84b) which rests on the support when the shelf is in the upper position, in order to free the shaft.

2. Device according to claim 1, **characterised in that** it also comprises means (102, 106) for arranging the shelf in a substantially vertical position in the boot of the vehicle, along the seat (98), when it is freed from the support.

3. Device according to claim 1 or claim 2, **characterised in that** it also comprises means (104, 108) for arranging the shelf in a substantially vertical position, in the middle of the boot (100) of the vehicle, in order to form a separating partition, when it is freed from the support.

4. Device according to any one of the preceding claims, **characterised in that** it comprises catch means (89, 91) for locking the shelf in a plurality of rotational positions, in order to maintain the shelf in at least one inclined position.
